**Europäisches Patentamt**

**European Patent Office**

**Office européen des brevets**

(19)

(11) Veröffentlichungsnummer: **0 258 222**
**B1**

(12) **EUROPÄISCHE PATENTSCHRIFT**

(45) Veröffentlichungstag der Patentschrift:
04.01.89

(21) Anmeldenummer: 86901395.3

(22) Anmeldetag: 25.02.86

(86) Internationale Anmeldenummer:
PCT/EP 86/00092

(87) Internationale Veröffentlichungsnummer:
WO 87/05144 (27.08.87 Gazette 87/19)

(51) Int. Cl.⁴: **G 11 B 33/02,** G 11 B 19/20,
H 02 K 5/00

(54) **GERÄT ZUR AUFZEICHNUNG UND/ODER WIEDERGABE VON INFORMATIONEN AUF BZW. VON EINEM ANGETRIEBENEN AUFZEICHNUNGSTRÄGER.**

(43) Veröffentlichungstag der Anmeldung:
09.03.88 Patentblatt 88/10

(45) Bekanntmachung des Hinweises auf die Patenterteilung:
04.01.89 Patentblatt 89/1

(84) Benannte Vertragsstaaten:
AT BE CH DE FR GB IT LI LU NL SE

(73) Patentinhaber: **Deutsche Thomson- Brandt GmbH,
Hermann- Schwer- Strasse 3 Postfach 1307,
D-7730 Villingen- Schwenningen (DE)**

(72) Erfinder: **LAUFER, Helmut, Eichendorffweg 12,
D-7742 St. Georgen (DE)**

(56) Entgegenhaltungen:
FR-A-2 062 499
FR-A-2 360 147
FR-A-2 408 938
GB-A-633 461
US-A-2 948 539
US-A-3 330 515

- Research Disclosure, Nr. 181, Mai 1979, Havants, Hants (GB) siehe Zusammenfassung 18101 "Motor Mount"
"Service Manual 2970-423, printed in Japan 83.12", Seite 18, eines Gerätes "Compact Disc Player CD-XI" von Yamaha, Nippon Gakki Co., Ltd. Hamamatusu, Japan

## Beschreibung

Die Erfindung betrifft ein Gerät nach dem Oberbegriff des Anspruchs 1.

Motore werden in Geräten so befestigt, daß sie ihre Aufgabe mit stets gleicher Qualität lösen können.

Es ist bekannt, den Motor mittels Flansch und Schrauben direkt mit dem Chassis zu verbinden und erst danach die Antriebsmittel (Plattenteller oder dgl.) zu montieren. Hier können Unwuchtprobleme auftreten. Beispielhafte Lösungen sind dem "Service Manual 2970 - 423, Printed in Japan 83.12", Seite 18, eines Gerätes "Compact Disc Player CD - X1" von Yamaha, Nippon Gakki Co., Ltd., Hamamatsu, Japan, zu entnehmen.

Der Erfindung liegt die Aufgabe zugrunde, die Montage eines Motors bei günstigen Bedingungen hinsichtlich Toleranz und Unwucht zu erreichen.

Diese Aufgabe wird bei einem Gerät nach dem Oberbegriff des Anspruchs 1 durch die im Kennzeichen des Anspruchs 1 beschriebenen Merkmale gelöst. Weiterbildungen der Erfindung sind in den Unteransprüchen gekennzeichnet.

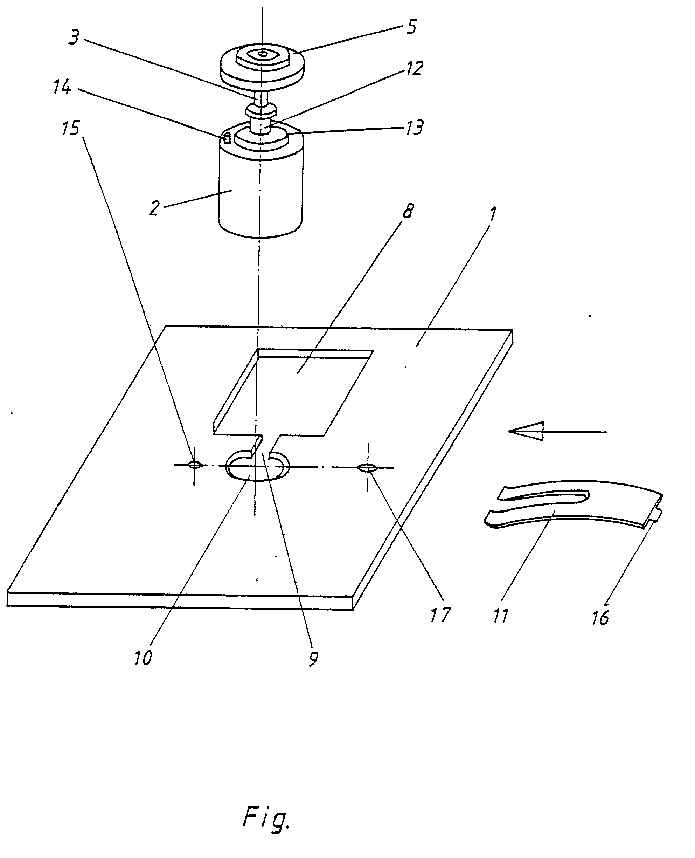

Zur näheren Erläuterung der Erfindung wird im folgenden ein Ausführungsbeispiel anhand der Zeichnung beschrieben. Diese zeigt in der

Figur ein Ausführungsbeispiel der Erfindung.

Die Figur zeigt ein zur Aufnahme eines vorgeprüften, mit dem Plattenteller 5 versehenen Motors 2 vorbereitetes Chassis 1, bei dem zur Montage keine Schrauben verwendet werden. Nach Montage des Plattentellers 5 auf der Motorwelle 3, das kann z. B. durch Aufdrücken und/oder Kleben geschehen, kann die Motor - Plattenteller - Einheit 2,5 hinsichlich Unwucht bearbeitet werden. Die Motor-Plattenteller-Einheit 2,5 wird über eine Aussparung 8 im Chassis 1 und einen Schlitz 9 in eine Zentriereinrichtung 10 in ihre Montageposition am Chassis gebracht. Dort wird eine Haltefeder 11 in eine Rille 12 am sogenannten Zentrieransatz 13 dieser Einheit geschoben.

Am Motorgehäuse bzw. dem Zentrieransatz kann ein parallel zur Antriebsachse vorgesehener Stift 14 zur Sicherung gegen Verdrehen vorgesehen sein und in eine entsprechende Bohrung 15 des Chassis eingreifen. Eine Zunge 16 an der Feder 11 greift in ein Gegenlager 17 am Chassis 1 ein und verhindert eine Eigenbewegung der Feder 11. Die Haltefeder 11 für die Motorbefestigung wird also als einziges Teil benötigt, um den Motor 2 auf dem Chassisblech 1 zu befestigen. Dafür muß der Motor den Zentrieransatz 13 mit der Rille 12 z. B. einen umlaufenden Einstich besitzen. Der Motor 2 mit dem montierten Plattenteller 5 kann durch die entsprechend große Aussparung 8 im Chassis 1 gesteckt und durch den schmalen Schlitz 9 in die sich anschließende Zentrierbohrung 10 gebracht und dort hochgehoben werden. In dieser Position wird die Haltefeder 11 in den Einstich am Motor-Zentrieransatz 13 geschoben, bis die mit ihrer Zunge 16 im Chassis 1 einrastet. Für diese Konstruktion hat sich eine längsgewölbte, etwa rechteckige, zweischenklige Haltefeder 11 mit einer rechtwinklig nach unten abgebogenen Zunge 16 bewährt.

Die erfindungsgemäße Konstruktion ist in vieler Hinsicht vorteilhaft. Es sind keine Schrauben erforderlich. Die Montagezeit ist kurz. Die Motorposition ist exakt. Der Plattenteller kann bereits vor der Motormontage an der Welle aufgedrückt und/oder geklebt werden. Die Naltefeder und das Chassis sind Stanzteile, die preisgünstig produziert werden können. Für den Service ist der Austausch sehr einfach. Die auftretenden Toleranzen in der Positionierung sind gering. Sie betragen etwa ein Viertel der möglichen Toleranz bekannter Lösungen.

Die in der Figur beschriebene Konstruktion ist besonders vorteilhaft für Plattenspieler mit optischer Abtastung, sogenannte CD-Spieler. Bei der Abtastung von CD-Platten ist es nämlich von großer Wichtigkeit, daß die optische Achse des Abtastsystems mit hoher Präzision mit der Senkrechten auf der CD-Platte am Abtastpunkt übereinstimmt. Abweichungen zwischen der optimalen Achse und der Senkrechten haben Fehlwinkel in der sogenannten Jitter- oder Radial-Richtung zur folge. Eine mangelhafte Abtastsicherheit oder Bit- oder Burstfehler können die Folge sein.

Die Achslage der Platte am Abtastpunkt ist von einer Reihe verschiedener Faktoren abhängig. So spielen Toleranzen des Antriebsmotors, der Motor-Halterung und des Plattentellers eine große Rolle. Um mögliche Exzentrizitäten so gering wie möglich zu halten, was für eine einwandfreie Spurhaltung in radialer Richtung unbedingt erforderlich ist, dürfen andererseits keine Unwuchten der drehenden Teile auftreten. Das verlangt eine Eingangskontrolle von Antriebsmotoren mit montierten Plattentellern. Einwandfreie Einheiten müssen selektiert werden.

Die Befestigung des Antriebsmotors am Chassis muß daher hinsichtlich auftretender, unzulässiger Toleranzen so vorgenommen werden, daß diese sich nicht addieren können. Dabei muß sichergestellt sein, daß der Motor einschließlich Plattenteller vor der Montage als Einheit bezüglich Unwucht kontrolliert, aussortiert bzw. korrigiert werden kann.

## Patentansprüche

1. Gerät mit einem Chassis (1) zur Aufzeichnung und/oder Wiedergabe von Informationen auf einem von einem Motor (2) direkt oder indirekt angetriebenen Aufzeichnungsträger, dadurch gekennzeichnet, daß

a) der Motor (2) einen positiven oder negativen Zentrieransatz (13) aufweist

b) dem Zentrieransatz (13) im Chassis (1) eine ortsfeste, entsprechende Zentriereinrichtung, beispielsweise eine Bohrung (10), zugeordnet ist

c) der Zentrieransatz (13) einen über die Zentriereinrichtung (10) hinausragenden Teil enthält

d) in dem Teil eine Rille (12) vorgesehen ist und

e) ein in die Rille (12) eingreifendes und gegen die Zentriereinrichtung (10) abstützbares Federteil (11) vorgesehen ist.

2. Gerät nach Anspruch 1, dadurch gekennzeichnet, daß Motor (2) und Chassis (1) durch ineinandergreifende Vorsprünge (14) und Vertiefungen (15) drehsicher und verschiebsicher verbunden sind.

3. Gerät nach Anspruch 1 oder 2, dadurch gekennzeichnet, daß die Zentriereinrichtung (10) in dem Chassis (1) über einen Schlitz (9) mit einer Aussparung (8) verbunden ist, durch die der Motor (2) mit seinem Zentrieransatz (13) in die Zentriereinrichtung (10) einsetzbar ist.

## Claims

1. Device with a chassis (1) for recording and/or reproducing information on a recording support driven directly or indirectly by a motor (2), characterised in that

a) the motor (2) comprises a positive or negative centering shoulder (13)

b) a stationary, corresponding centering device, for example a bore (10), is associated with the centering shoulder (13) in the chassis (1)

c) the centering shoulder (13) comprises a part which extends beyond the centering device (10)

d) a groove (12) is provided in the part and

e) a spring part (11) is provided which engages in the groove (12) and can be supported against the centering device (10).

2. Device according to claim 1, characterised in that the motor (2) and the chassis (1) are connected together by interlocking projections (14) and cavities (15) in a non-rotatable and non-displaceable manner.

3. Device according to claim 1 or 2, characterised in that the centering device (10) in the chassis (1) is connected via a slot (9) to an opening (8), through which the motor (2) with its centering shoulder (13) can be inserted in the centering device (10).

## Revendications

1. Appareil comportant un châssis (1) servant à enregistrer et/ou reproduire des informations sur un support d'enregistrement entraîné directement ou indirectement par un moteur (2), caractérisé par le fait que

a) le moteur (2) possède un embout de centrage positif ou négatif (13),

b) à l'embout de centrage (13) se trouve associé, dans le châssis (1), un dispositif fixe de centrage correspondant, par exemple un perçage (10),

c) l'embout de centrage (13) contient une partie qui fait saillie au-delà du dispositif de centrage (10),

d) il est prévu une gorge (12) dans cette partie, et

e) il est prévu un élément de ressort (11) s'engageant dans la gorge (12) et pouvant prendre appui contre le dispositif de centrage (10).

2. Appareil selon la revendication 1, caractérisé en ce que le moteur (2) et le châssis (1) sont reliés avec blocage en rotation et en translation, par des parties saillantes (14) et des renfoncements (15), qui s'interpénètrent.

3. Appareil selon la revendication 1 ou 2, caractérisé en ce que le dispositif de centrage (10) prévu dans le châssis (1) est relié, par l'intermédiaire d'une fente (9), à un évidement (8) au moyen duquel le moteur (2) peut être inséré par son embout de centrage (13) dans le dispositif de centrage (10).

3

14

15

2

5

12

13

8

1

10

9

17

11

16

*Fig.*

1